# EUROPEAN PATENT SPECIFICATION

(11) **EP 3 188 880 B1**
(45) Date of publication and mention of the grant of the patent: **16.12.2020**
(21) Application number: 15756670.4
(22) Date of filing: 03.09.2015
(51) Int. Cl.: B26D 3/18, B26D 3/22, B26D 1/29, B26D 7/00, A47J 43/07

(54) **SECURITY LOCKING FOR KITCHEN APPLIANCES**
SICHERHEITSVERRIEGELUNG FÜR KÜCHENGERÄTE
VERROUIAGE DE SÉCURITÉ POUR DES APPAREILS DE CUISINE

(30) Priority: 04.09.2014 SI 201400303
(43) Date of publication of application: 12.07.2017
(73) Proprietor: BSH Hausgeräte GmbH, 81739 München (DE)
(72) Inventor: IVANUSIC, Marko, 8340 Crnomelj (SI); KOVACIC, Peter, 3303 Gomilsko (SI); ZLAUS, Uros, 3201 Smartno v Rozni dolini (SI)
(86) International application number: PCT/EP2015/070114
(87) International publication number: WO 2016/034662

(56) References cited:
- EP-A1- 1 637 057
- EP-A1- 3 113 661
- EP-B1- 2 323 820
- DE-A1-102012 103 876

## Description

### Background

The invention relates to security features for cube cutters and similar attachments for kitchen appliances used for food processing.

### Prior art

Various food processing kitchen appliances, such as kitchen machines, hand blenders and others also have attachments, so-called cube cutters, used to produce cubes of a certain size from e.g. carrots. The motor of the basic appliance is usually used to run the cube cutters, whereby the cube cutter is attached using a suitable coupling. The cube cutters are frequently installed in the food processing vessel and protected from unwanted rotation during operation by using braces on the sides of the processing vessel. In this configuration, the user is required to complete too many steps in order to assemble and disassemble the attachment before and after use. Solutions are available which use snap-in fastening elements that are closed and opened by the user. During this process, attention must be paid to ensuring that the rotating blade is correctly inserted into the attachment, which includes the angular position of the blade. Other appliances use other elements instead of snap-ins, which again reduces user-friendliness by increasing the number of component parts.

The closest state-of-the-art to the innovation presented herein is presented in the patent application EP 2323820 (B1), which describes a very similar method for locking the rotating blade of a kitchen appliance cube cutter, which uses uniformly spaced snap-ins on the perimeter of the cube cutter to lock the blade. These snap-ins must be opened and closed manually every time the rotating blade of the cube cutter is inserted; if not, the cube cutter cannot be correctly connected to the cover, thereby preventing the machine from being started.

EP 1 637 057 A1 discloses a culinary preparation apparatus that facilitates detection of a presence of a lid on a casing in different points and locking of the lid on the casing. The apparatus comprises an activating unit that separates locking unit from a stopper of a casing, when a cover is placed on casing, and control unit is displaced towards an apparatus operating position for engaging retaining unit with locking unit.

The known solutions therefore all have the same problem, i.e. the user is required to complete several steps in order to assemble and disassemble the cube cutter before and after use. Errors in assembly may also be made, preventing the appliance from starting, or even damaging the parts. It would therefore be beneficial to simplify the assembly process.

WO 2015 /134694 A1 describes a blender jar assembly with a blender jar and a blender base. The blender jar has first and second engagement member in the form of protrusion tabs arranged at the bottom of the jar. Rotating the jar cause the protrusions to engage fastening elements.

### Underlying object of the invention

The purpose of the invention is to improve the cube cutter lock for a kitchen appliance, thereby increasing ease of use and improving the safety of using the kitchen appliance.

### Inventive solution

In order to achieve the purpose of the invention, we present security locking for a kitchen appliance as claimed in Claim 1. Furthermore, a kitchen appliance used to process food is presented, as described in Claim 9. Further embodiments may be implemented individually or in any combination, as claimed in the dependent claims.

The invention presents a security locking for a cube cutter of a kitchen appliance, the security locking comprising a cover and a cube cutter, wherein the cover is adapted to be attached to the cube cutter, whereby the cover includes at least one automatic locking element, and the cube cutter comprises a rotating blade with at least one fastening element, wherein said fastening elements are automatically locked into the operating position when the cover is attached to the cube cutter. The locking elements on the bottom of the cover are adapted in such a way that when the cover is joined with the cube cutter, the snap-ins used to fasten the rotating blade are locked automatically. The fastening elements thereby lock the rotating blade into the operating position. The rotating blade remains free to rotate about its axis in order to process the food.

The purpose of the invention is achieved by adding automatic locking elements to the bottom of the cover. These security locking elements automatically lock the fastening elements used to fasten the rotating blade into the operating position. The user therefore no longer needs to ensure manually that all fastening elements are in the locked position before starting to attach the cover to the cube cutter.

The solutions described in this invention are not limited to the cube cutter for kitchen appliances, and can be applied to all similar attachments requiring assembly/disassembly before and after use.

### Embodiments of the invention

The embodiments which can be used individually or in any combination are subject to subclaims.

In a preferred embodiment, said automatic locking elements are in the form of protrusions on the bottom side of the cover, which automatically engage and move any fastening elements of the rotating blade of the cube cutter that are in the unlocked position, into the locked position as the cover is attached to the cube cutter and fixed into operating position by rotating said cover by a fraction of the perimeter. The protrusions are preferably made of the same material as the cover. They are designed in such a fashion that during attachment of the cube cutter and the cover, in the first phase they are brought into the vicinity of the fastening elements of the rotating cube cutter blade. Then, when the joining is finished, e.g. by rotating the cover in regard to the cube cutter, the protrusions come into contact with any remaining unlocked fastening elements, pushing them into the locked position. If all fastening elements had already been set into the locked position before installation of the cover, the automatic locking elements do not come into contact with the protrusions, except in the sense of additional fixation of the fastening elements into the locked position after the attachment of the cover to the cube cutter has been complete.

According to the invention fastening elements of the rotating blade of the cube cutter are in the form of snap-ins. A simple, low-cost and effective option for fastening elements is to use snap-ins with bearings, preferably made from metal, but other materials can also be used.

Preferably, the security locking comprises three or four fastening elements of the rotating blade of the cube cutter. This enables multi-point fastening, rotation stability and safety in case any of the fastening elements breaking. A larger number of fastening elements is usually not required, as this does not contribute significantly to the effects mentioned above.

It is preferable that there is exactly one automatic locking element corresponding to and engaging each of the fastening elements. Considering the spatial arrangement of the automatic locking elements and the fastening elements, this is the most cost-effective option, requiring the least material used.

Alternatively, it is conceivable that at least one automatic locking element is engaging more than one fastening element. Methods of practicing the invention are possible in which the automatic locking elements are adapted in such a way as to be present on a larger portion of the perimeter, thereby automatically locking more than one fastening element when the cover and the cube cutter are joined.

In a further embodiment, the fastening elements are arranged along the perimeter of the rotating blade of the cube cutter at uniform angular distances. In principle, this is the most effective way of fixing the rotating cube cutter blade, as the forces affecting the fastening elements are most uniformly distributed.

Similarly, the automatic locking elements are preferably arranged along the perimeter of the cover at uniform angular distances. This arrangement makes sense as the elements must be arranged in such a way as to cover all fastening elements for the rotating cube cutter blade, which is achieved most easily by arranging the automatic locking elements on the bottom of the cover in exactly the same way as the fastening elements along the perimeter of the cube cutter.

### Brief description of the drawings

Figure 1 shows the components when assembling a cube cutter for a kitchen appliance.
Figure 2 shows the procedure for attaching the cover onto the cube cutter.
Figure 3 shows the procedure for locking the cover onto the cube cutter.
Figure 4 shows the cube cutter in the locked position.
Figure 5 shows a magnified view of the automatic locking element on the bottom of the cover.

### Detailed description of the invention

The invention presented applies both to a cube cutter 1 and to any other kitchen appliance attachment which attaches directly to the drive motor of a kitchen appliance. The significant advantage of the invention is that in case of carelessness by the user, it prevents incorrect assembly of the kitchen appliance before start of operation. Furthermore, the number of steps required during assembly and disassembly of the appliance is reduced. Together this significantly improves operational safety and reduces the risk of damage to the kitchen appliance due to improper use. A further advantage of the assembly of the cube cutter 1 is that the user can remove the vessel 7 with the processed food (i.e. with the cubes) without disassembling the cube cutter 1, as it is attached directly to the cover 6.

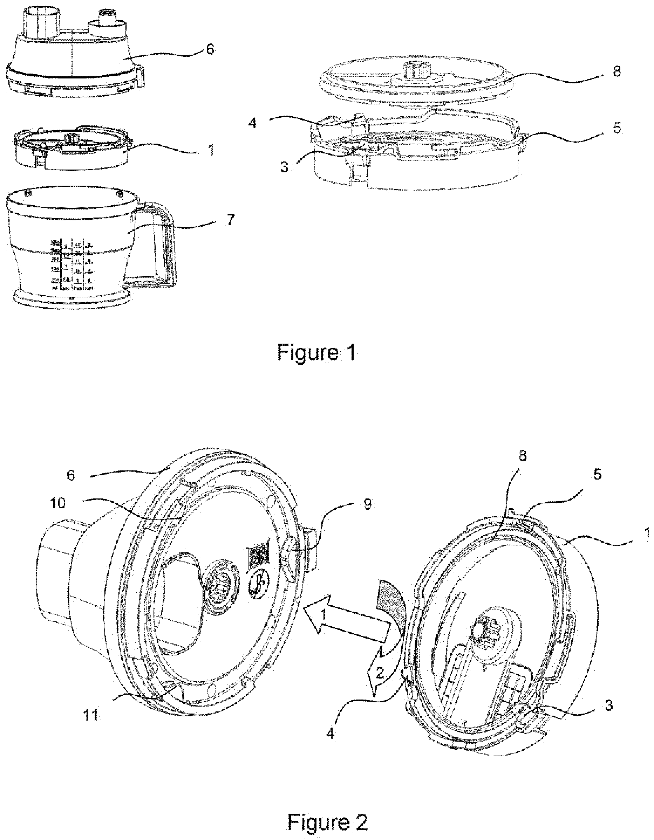

Figure 1 shows the method of assembling the kitchen appliance attachment, in this case with the cube cutter 1. The connected cover 6 and cube cutter 1 are installed onto the vessel 7. The following options are available: the cube cutter 1 is installed onto the vessel 7 first, followed by the cover 6, or, as shown in the example above; the cube cutter 1 and the cover 6 are connected first, and then installed onto the vessel 7 in such a way that the mechanism for attachment to the vessel 7 is on the outside perimeter of the bottom of the cover 6, while the mechanism for connecting the cube cutter 1 and the cover 6 is on the inside perimeter of the bottom of the cover 6. The right part of Figure 1 also shows how the rotating Blade 8 used for processing of food is installed onto the cube cutter 1.

Figure 2 shows the attachment of the cube cutter 1 to the cover 6. The rotating blade 8 for processing of food must be previously installed onto the cube cutter 1 to ensure correct operation. To allow said installation, the fastening elements 3,4,5 must be open so that the rotating blade 8 can be installed into the operating position. Before the start of operation, the fastening elements 3,4,5 must be in the locked position, protecting the rotating blade 8 during operation. In the presented embodiment, the fastening elements 3,4,5 are snap-ins partially rotatable around their own axis. The user can set the fastening elements 3,4,5 into the locked position manually and/or individually. This has been the only option prior to the present invention. In the solution according to this invention, however, the cover 6 has automatic locking elements 9,10,11 installed on the inside perimeter of the bottom of the cover 6. After the connection of the cover 6 to the cube cutter 1 with the installed rotating blade 8,the shape of the automatic locking elements 9,10,11 causes the fastening elements 3,4,5 to move, specifically partially rotate, into the locked position during rotation of the cover 6. This makes the kitchen device attachment ready for use regardless of whether or not the user had previously manually set the fastening elements 3,4,5 into the locked position.

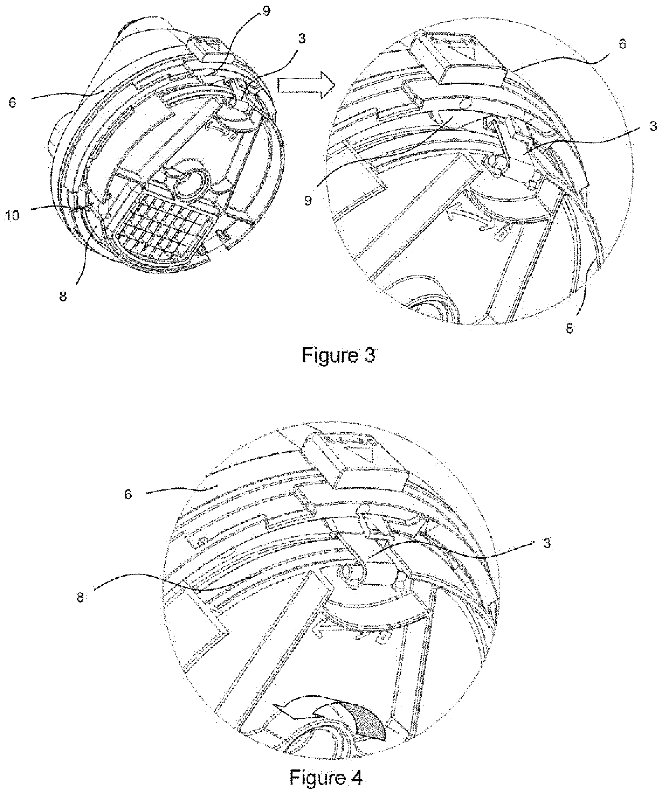

Figure 3 shows the detail of setting the fastening element 3 of the rotating blade 8 into the locked position. When the cover 6 is connected with the cube cutter 1 and the two are locked together by rotation, the automatic locking element 9 comes into contact with the fastening element 3. During this, the shape of the automatic locking element 9 causes the fastening element 3 to be moved towards the locked position during the rotation of the cover 6 relative to the cube cutter 1 and finally set into the locked position as the rotation is completed ant the cover 6 is connected to the cube cutter 1. The shape of the automatic locking element 9 is adapted in such a way that, the distance between the center of rotation and the closest edge of the automatic locking element 9 decreases along the perimeter in the angular direction that is opposite to that of rotation of the cover 6 in regard to the cube cutter 1 during attachment. This movement initially causes contact between an automatic locking element 9,10,11 of the cover 6 and any fastening element 3,4,5, that has been left in the unlocked position after instalment of the rotation blade 8. Further movement/partial rotation around its own axis results in the positioning of fastening elements 3,4,5 into their respective locked positions when the rotation is continued and concluded.

Figure 4 shows the cube cutter 1 with the cover 6 attached in the fully locked operating position. The fastening element 3 is in the locked position, thereby fixing the radial position of rotating blade 8, while the rotating blade 8 can still rotate freely around its axis.

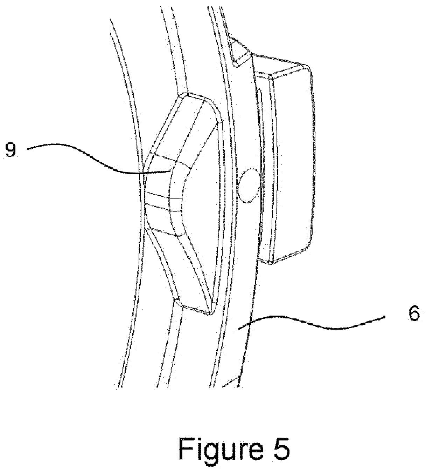

Figure 5 shows the position and the shape of an automatic locking element 9 on the inside of the perimeter of the bottom part of the cover 6. In this case, the automatic locking element 9 is shaped as a protrusion with a diminishing radial distance between the center of rotation and the inner contour of the locking element 9 along the perimeter in the direction of rotation of the cover 6 in regard to the cube cutter 1. Embodiments using a slower or faster change of radial distance are possible, as are those with a predominantly linear slope of change or with a changing slope. At the thickest part of the protrusion, whose thickness as measured from the inside edge of the perimeter of the bottom part of the cover 6 in the radial direction is preferably between 3 and 15 mm, depending on the shape of the fastening element 3 of the rotating blade 8 of the cube cutter 1. An element can be added protecting the joined attachment from unwanted disconnection of the cover 6 and the cube cutter 1. This element can be implemented in such a way that at the final locking position, the thickness of the protrusion of the automatic locking element 9 is slightly lower, causing theover 6 to be fixed in a more stable position.

### List of designations

- 1: cube cutter
- 3, 4, 5: fastening elements of the rotating blade
- 6: cover
- 7: vessel
- 8: rotating blade
- 9, 10, 11: automatic locking elements

## Claims

1. A security locking for a cube cutter (1) of a kitchen appliance, the security locking comprising a cover and a cube cutter, wherein the cover (6) is adapted to be attached to the cube cutter (1), whereby the cover (6) includes at least one automatic locking element (9, 10, 11), and the cube cutter (1) comprises a rotating blade (8) with at least one fastening element (3,4,5), wherein said fastening elements (3,4,5) are automatically locked into the operating position when the cover (6) is attached to the cube cutter (1), wherein said automatic locking elements (9, 10, 11) are in the form of protrusions on the bottom side of the cover (6), which automatically engage and move any fastening elements (3,4,5) of the rotating blade (8) of the cube cutter (1) that are in the unlocked position, into the locked position as the cover (6) is attached to the cube cutter (1) and fixed into operating position by rotating said cover (6) by a fraction of the perimeter, wherein said fastening elements (3,4,5) of the rotating blade (8) of the cube cutter (1) are in the form of snap- ins.

2. The security locking according to any of the previous claims, **characterized in that** it has three or four said fastening elements (3,4,5) of the rotating blade (8) of the cube cutter (1).

3. The security locking according to any of the previous claims, **characterized in that** it has exactly one automatic locking element (9, 10, 11) corresponding to and engaging each of the fastening elements (3,4,5).

4. The security locking according to any of the Claims 1 to 3, **characterized in that** it has at least one automatic locking element (9, 10, 11) engaging more than one fastening element (3,4,5).

5. The security locking according to any of the previous claims, **characterized in that** said fastening elements (3,4,5) are positioned along the perimeter of the rotating blade (8) of the cube cutter (1) at uniform angular distances.

6. The security locking according to any of the previous claims, **characterized in that** it has said automatic locking elements (9, 10, 11) positioned along the internal perimeter of the cover (6) at uniform angular distances.

## Patentansprüche

1. Sicherheitsverriegelung für einen Würfelschneider (1) eines Küchengeräts, die einen Deckel und einen Würfelschneider umfasst, wobei der Deckel (6) so ausgelegt ist, dass er sich an dem Würfelschneider (1) anbringen lässt, wobei der Deckel (6) mindestens ein automatisches Verriegelungselement (9, 10, 11) aufweist und der Würfelschneider (1) eine rotierende Klinge (8) mit mindestens einem Befestigungselement (3, 4, 5) umfasst, wobei die Befestigungselemente (3, 4, 5) automatisch in Einsatzposition verriegelt sind, wenn der Deckel (6) an dem Würfelschneider (1) angebracht ist, wobei die automatischen Verriegelungselemente (9, 10, 11) in Form von Vorsprüngen an der Unterseite des Deckels (6) vorliegen, die automatisch in Befestigungselemente (3, 4, 5) der rotierenden Klinge (8) des Würfelschneiders (1) eingreifen, die sich in der unverriegelten Position befinden, und diese in die verriegelte Position bewegen, während der Deckel (6) an dem Würfelschneider (1) angebracht und durch Drehen um einen Teil des Umfangs in Einsatzposition fixiert wird,
wobei die Befestigungselemente (3, 4, 5) der rotierenden Klinge (8) des Würfelschneiders (1) in Form von Einrastelementen vorliegen.

2. Sicherheitsverriegelung nach einem der vorhergehenden Ansprüche, **dadurch gekennzeichnet, dass** sie drei oder vier der Befestigungselemente (3, 4, 5) der rotierenden Klinge (8) des Würfelschneiders (1) aufweist.

3. Sicherheitsverriegelung nach einem der vorhergehenden Ansprüche, **dadurch gekennzeichnet, dass** sie genau ein automatisches Verriegelungselement (9, 10, 11) aufweist, das jedem der Befestigungselemente (3, 4, 5) entspricht und jeweils in dieses eingreift.

4. Sicherheitsverriegelung nach einem der Ansprüche 1 bis 3, **dadurch gekennzeichnet, dass** sie mindestens ein automatisches Verriegelungselement (9, 10, 11) aufweist, das in mehr als ein Befestigungselement (3, 4, 5) eingreift.

5. Sicherheitsverriegelung nach einem der vorhergehenden Ansprüche, **dadurch gekennzeichnet, dass** die Befestigungselemente (3, 4, 5) in gleichmäßigen Winkelabständen entlang des Umfangs der rotierenden Klinge (8) des Würfelschneiders (1) positioniert sind.

6. Sicherheitsverriegelung nach einem der vorhergehenden Ansprüche, **dadurch gekennzeichnet, dass** die automatischen Verriegelungselemente (9, 10, 11) in gleichmäßigen Winkelabständen entlang des Innenumfangs des Deckels (8) positioniert sind.

## Revendications

1. Verrouillage de sécurité pour un découpeur cubique (1) d'un ustensile de cuisine, le verrouillage de sécurité comprenant un couvercle et un découpeur cubique, dans lequel le couvercle (6) est adapté pour être fixé au découpeur cubique (1), dans lequel le couvercle (6) inclut au moins un élément de verrouillage automatique (9, 10, 11) et le découpeur cubique (1) comprend une lame rotative (8) avec au moins un élément de fixation (3, 4, 5), dans lequel lesdits éléments de fixation (3, 4, 5) sont automatiquement verrouillés dans la position de fonctionnement lorsque le couvercle (6) est fixé sur le découpeur cubique (1), **dans lequel** lesdits éléments de verrouillage automatiques (9, 10, 11) sont sous la forme de saillies sur le côté inférieur du couvercle (6), qui mettent automatiquement en prise et déplacent les éventuels éléments de fixation (3, 4, 5) de la lame rotative (8) du découpeur cubique (1) qui sont dans la position déverrouillée, dans la position verrouillée lorsque le couvercle (6) est fixé au découpeur cubique (1) et fixé dans la position de fonctionnement en faisant tourner ledit couvercle (6) d'une fraction du périmètre, dans lequel lesdits éléments de fixation (3, 4, 5) de la lame rotative (8) du découpeur cubique (1) sont sous la forme de systèmes d'encliquetage.

2. Verrouillage de sécurité selon l'une quelconque des revendications précédentes, **caractérisé en ce qu'**il présente trois ou quatre éléments de fixation (3, 4, 5) de la lame rotative (8) du découpeur cubique (1).

3. Verrouillage de sécurité selon l'une quelconque des revendications précédentes, **caractérisé en ce qu'**il présente exactement un élément de verrouillage automatique (9, 10, 11) correspondant et mettant en prise chacun des éléments de fixation (3, 4, 5).

4. Verrouillage de sécurité selon l'une quelconque des revendications 1 à 3, **caractérisé en ce qu'**il présente au moins un élément de verrouillage automatique (9, 10, 11) mettant en prise plusieurs éléments de fixation (3, 4, 5).

5. Verrouillage de sécurité selon l'une quelconque des revendications précédentes, **caractérisé en ce que** les éléments de fixation (3, 4, 5) sont positionnés le long du périmètre de la lame rotative (8) du découpeur cubique (1) à des distances angulaires uniformes.

6. Verrouillage de sécurité selon l'une quelconque des revendications précédentes, **caractérisé en ce qu'**il présente lesdits éléments de verrouillage automatiques (9, 10, 11) positionnés le long du périmètre interne du couvercle (6) à des distances angulaires uniformes.
